(19) Europäisches Patentamt / European Patent Office / Office européen des brevets

(11) **EP 1 955 925 B1**

(12) **EUROPÄISCHE PATENTSCHRIFT**

(45) Veröffentlichungstag und Bekanntmachung des Hinweises auf die Patenterteilung:
**04.11.2009  Patentblatt 2009/45**

(51) Int Cl.:
***B62D 5/04*** *(2006.01)*

(21) Anmeldenummer: **07120699.9**

(22) Anmeldetag: **14.11.2007**

(54) **Verfahren zum Betrieb eines Lenksystems in einem Kraftfahrzeug**

Method for operating the steering system in a motor vehicle

Procédé destiné au fonctionnement d'un système de direction dans un véhicule automobile

(84) Benannte Vertragsstaaten:
**DE ES FR GB IT SE**

(30) Priorität: **08.02.2007   DE 102007006232**

(43) Veröffentlichungstag der Anmeldung:
**13.08.2008   Patentblatt 2008/33**

(73) Patentinhaber: **ZF-Lenksysteme GmbH**
**73527 Schwäbisch Gmünd (DE)**

(72) Erfinder:
• **Heilig, Arnulf**
  **73529, Schwäbisch Gmünd (DE)**
• **Heger, Markus**
  **D-73565 Spraitbach (DE)**

(56) Entgegenhaltungen:
| | |
|---|---|
| EP-A- 1 256 507 | DE-A1-102005 011 379 |
| JP-A- 6 340 270 | JP-A- 2002 255 054 |
| JP-A- 2004 196 128 | JP-A- 2006 248 252 |
| JP-A- 2006 273 031 | US-A- 5 704 446 |
| US-A1- 2002 017 421 | |

EP 1 955 925 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung bezieht sich auf ein Verfahren zum Betrieb eines Lenksystems in einem Kraftfahrzeug.

In der DE 102 21 678 A1 wird ein Lenksystem für ein Kraftfahrzeug beschrieben, dem ein elektrischer Stellmotor zugeordnet ist, über den ein unterstützendes Moment erzeugbar ist. In Abhängigkeit eines vom Fahrer erzeugten Handlenkmomentes wird eine Sollmomentvorgabe errechnet, die als Eingangsgröße dem Stellmotor zugeführt wird, woraufhin in dem Stellmotor ein Motorstellmoment erzeugt wird. Der Stellmotor kann an einem Lenkgetriebe angeordnet werden, über das der vom Fahrer vorgegebene Lenkwinkel in einen Radlenkwinkel übertragen wird.

Die JP 06-340270 A zeigt ein Verfahren zum Betrieb eines Lenksystems in einem Kraftfahrzeug, wobei das Verfahren nachfolgende Verfahrensschritte aufweist:

- ein Motorstellmoment wird zur Lenkunterstützung im Lenksystem erzeugt, wobei einem Steilmotor eine Sollmomentvorgabe zugeführt wird,

- der Fahrer gibt über das Lenkrad ein Handlenkmoment im Lenksystem vor und in Abhängigkeit von bestimmten Fahrzeugbetriebsgrößen wird der Widerstand gegen Lenkwinkeländerungen zur Steigerung des vom Fahrer aufzubringenden Handlenkmoments erhöht,

- als Fahrzeugbetriebsgrößen werden eine Lenkwinkelobergrenze und eine Lenkwinkelgrenzgeschwindigkeit berücksichtigt, wobei der Widerstand gegen Lenkwinkeländerungen erhöht wird, wenn die Lenkwinkelobergrenze und die Lenkwinkelgrenzgeschwindigkeit jeweils überschritten werden, und wobei der Widerstand gegen Lenkwinkeländerungen nur unterhalb einer beim Parkieren auftretenden Fahrzeuggrenzgeschwindigkeit erhöht wird.

Die Lenkleistung elektrisch ansteuerbarer Lenksysteme wird üblicherweise für einen Parkiervorgang ausgelegt. Hierzu werden als Vorgaben eine minimale Lenkgeschwindigkeit als Funktion des Lenkwinkels bzw. Zahnstangenhubs sowie die benötigte Zahnstangenkraft als Funktion des Lenkwinkels bzw. Zahnstangenhubs berücksichtigt. Aus diesen Größen kann die maximal benötigte Zahnstangenleistung berechnet werden, auf die die Aktuatorik ausgelegt wird. Aus der Aktuatorauslegung und der real im Fahrzeug auftretenden Lenkkräfte resultiert eine maximal erreichbare Lenkgeschwindigkeit des Servomotors in Abhängigkeit des Zahnstangenhubs bzw. Lenkwinkels. Für alle Lenkwinkelgeschwindigkeiten oberhalb dieses Grenzwertes muss der Fahrer mechanisch zulenken, wofür ein erheblicher Widerstand im Lenkrad überwunden werden muss, was sich in einem entsprechenden Anstieg des vom Fahrer aufzubringenden Handlenkmomentes niederschlägt.

Die Servofunktion von dem elektrisch angesteuerten Lenksystem ermöglicht dem Fahrer ein Parkieren mit niedrigen Lenkmomenten. Die Leistungsauslegung des elektrisch angesteuerten Lenksystems erfolgt üblicherweise für den Punkt mit maximaler mechanischer Lenkleistung. Aufgrund der geringen Zahnstangenkräfte im Mittenbereich sind jedoch in diesem Betriebsbereich der Lenkung sehr hohe Geschwindigkeiten möglich, so dass der Fahrer während des Parkiervorganges das Lenkrad um den Mittenbereich herum sehr stark beschleunigen kann. Mit zunehmendem Lenkwinkel steigt die Zahnstangenkraft an und nimmt die mögliche Lenkgeschwindigkeit stark ab. Beim Übergang zwischen dem Mittenbereich und dem Außenbereich der Lenkung kann der Fahrer bei hohen Lenkwinkelgeschwindigkeiten einen starken Anstieg des Widerstandes im Lenkrad gegen weitere Lenkelwinkeländerungen spüren, der durch ein entsprechend höheres Handlenkmoment, welches der Fahrer aufbringen muss, überwunden werden muss. Dieser starke Momentenanstieg wird vom Fahrer aber in der Regel als störend empfunden.

Der Erfindung liegt die Aufgabe zugrunde, das Lenkverhalten in Kraftfahrzeugen zu verbessern. Es soll insbesondere bei schnellen Lenkbewegungen ein plötzlicher Anstieg des Widerstandes im Lenkrad gegen Lenkwinkeländerungen vermieden werden.

Diese Aufgabe wird erfindungsgemäß mit den Merkmalen des Anspruches 1 gelöst. Die Unteransprüche geben zweckmäßige Weiterbildungen an.

Durch die Erfindung wird der Effekt erzielt, dass der Fahrer von vornherein ein bestimmtes Handlenkmoment für Lenkwinkeländerungen aufbringen muss. Ein plötzlicher Anstieg des Widerstandes gegen Lenkwinkeländerungen fällt dadurch weg bzw. wird erheblich vermindert, wodurch negative Überraschungseffekte vermieden werden. Ggf. wird zwar in Kauf genommen, dass der Fahrer höhere Lenkkräfte aufbringen muss; das Niveau des maximal zu erzeugenden Handlenkmomentes kann aber über eine entsprechende Einstellung der Aktuatorik auf ein gewünschtes Niveau gebracht werden. Hierdurch erhöht sich auch die Sicherheit, da Panikreaktionen verhindert werden.

Als Fahrzeugzustands- bzw. Fahrzeugbetriebsgröße, von der der Widerstand gegen Lenkwinkeländerungen abhängig gemacht wird, wird eine Lenkwinkelgrenzgeschwindigkeit herangezogen, wobei der Widerstand gegen Lenkwinkeländerungen erhöht wird, falls die Lenkwinkelgrenzgeschwindigkeit überschritten wird. Die Lenkwinkelgrenzgeschwindigkeit wird als Funktion des Lenkwinkels fortlaufend berechnet.

Die Erhöhung des Widerstandes zur Steigerung des vom Fahrer aufzubringenden Handlenkmomentes kann auf verschiedene Arten durchgeführt werden. Gemäß einer zweckmäßigen Ausführung wird die dem Stellmotor zuzuführende Sollmomentvorgabe begrenzt bzw. reduziert, so dass der Fahrer einen höheren Anteil am Lenkmoment beisteuern muss, um die gewünschte Lenkwinkeländerung zu erreichen. Das Verhältnis zwischen dem Handlenkmoment und dem Motorstellmoment wird zugunsten eines höheren, vom Fahrer zu erzeugenden Handlenkmomentes verschoben.

Gemäß der Erfindung wird der Widerstand gegen Lenkwinkeländerungen nur unterhalb einer beim Parkieren auftretenden Fahrzeuggrenzgeschwindigkeit erhöht, die beispielsweise bei 15 oder 20 km/h liegt. Hierdurch ist sichergestellt, dass die Widerstandserhöhung nur beim Parkieren bzw. Rangieren durchgeführt wird, nicht aber im normalen Fahrbetrieb des Fahrzeuges bei höheren und hohen Geschwindigkeiten. Der beim Parkieren höhere Lenkwiderstand wird normalerweise durch ein entsprechend erhöhtes Servomoment kompensiert; gemäß der Erfindung ist vorgesehen, durch geeignete Maßnahmen auch beim Parkieren und Rangieren den Widerstand gegen Lenkwinkeländerungen auf künstliche Art und Weise zu erhöhen, so dass der Fahrer ein erhöhtes Handlenkmoment aufbringen muss. Die damit einhergehenden geringfügigen Komforteinbußen werden durch die erhöhte Sicherheit wettgemacht, die durch Vermeidung von Panikreaktionen des Fahrers erreicht werden, die bei schnellen Lenkbewegungen im Falle eines plötzlich auftretenden erhöhten Widerstandes nach einem anfänglich geringen Widerstand erfolgen können.

Gemäß einer weiteren vorteilhaften Ausführung wird der Widerstand gegen Lenkwinkeländerungen dadurch erhöht, dass ein von der Lenkwinkelgeschwindigkeit abhängiges Dämpfungsmoment erzeugt wird, das Lenkwinkeländerungen entgegengerichtet ist. Dieses Dämpfungsmoment wird üblicherweise auf elektronischer Ebene in einem Regel- bzw. Steuergerät des Lenksystems dadurch erzeugt, dass die dem Stellmotor zuzuführende Sollmomentvorgabe als Funktion des Dämpfungsmomentes berechnet wird, insbesondere aus der Differenz von einem in einem Regler berechneten Motorsollmoment und dem lenkwinkelgeschwindigkeitsabhängigen Dämpfungsmoment. Über die Subtraktion des Dämpfungsmomentes von dem Motorsollmoment wird eine Reduzierung der Sollmomentvorgabe erreicht, die dem Stellmotor zugeführt wird, so dass wie oben ausgeführt der Fahrer ein erhöhtes Handlenkmoment zur Kompensation der reduzierten Sollmomentvorgabe erzeugen muss.

Grundsätzlich kommt aber auch eine Dämpfung über ein separates Bauteil im Lenksystem in Betracht, das mechanisch, elektrisch, pneumatisch, hydraulisch oder in sonstiger Weise funktioniert.

Eine weitere Möglichkeit, den Widerstand gegen Lenkwinkeländerungen zu erhöhen, besteht darin, das Motorstellmoment zur Lenkunterstützung im Lenksystem zu reduzieren, indem das im Regler berechnete Motorsollmoment auf einen Maximalwert begrenzt wird. Möglich ist auch, das rechnerisch ermittelte Motorsollmoment mit seinem im laufenden Verfahren ermittelten, aktuellen Wert durch Beaufschlagung mit einem Begrenzungsfaktor zu begrenzen. Im ersten Fall wird lediglich ein Maximalwert vorgegeben, auf den das Motorsollmoment gedeckelt wird, im zweiten Fall wird jeder aktuell ermittelte Motorsollmomentwert mit einem Begrenzungsfaktor multipliziert, der kleiner als eins ist. In beiden Fällen wird eine Limitierung auf einen Maximalwert erzielt. Diese Limitierung erfolgt insbesondere in Abhängigkeit einer weiteren Zustands- bzw. Betriebsgröße des Fahrzeuges, bevorzugt in Abhängigkeit der Lenkwinkelgeschwindigkeit, so dass mit zunehmender Lenkwinkelgeschwindigkeit das maximale Motorsollmoment herabgesetzt wird.

Allgemein kann es zweckmäßig sein, den Widerstand gegen Winkeländerungen als Funktion einer Fahrzeugzustands- oder Betriebsgröße veränderlich einzustellen, insbesondere als Funktion der Fahrzeuggeschwindigkeit. Dies ermöglicht einen Übergang zwischen dem Parkieren bzw. Rangieren und dem Anfahren bzw. regulären Fahrbetrieb, beispielsweise über eine definierbare Rampe, die als Funktion der Fahrzeuggeschwindigkeit darstellbar ist.

Weitere Vorteile und zweckmäßige Ausführungen sind den weiteren Ansprüchen, der Figurenbeschreibung und den Zeichnungen zu entnehmen. Es zeigen:

Fig. 1     eine schematische Darstellung eines Lenksystems in einem Fahrzeug, bei dem einem Lenkgetriebe ein Überlagerungsgetriebe vorgeschaltet ist,

Fig. 2     die maximal erreichbare Lenkwinkelgeschwindigkeit als Funktion des Lenkwinkels,

Fig. 3     das vom Fahrer aufzubringende Handlenkmoment als Funktion des Lenkwinkels,

Fig. 4     ein Blockschaltbild zur Ermittlung des Motorstellmomentes für den Stellmotor im Lenksystem, wobei ein von der Lenkwinkelgeschwindigkeit abhängiges Dämpfungsmoment berücksichtigt wird,

Fig. 5     ein weiteres Blockschaltbild zur Ermittlung des Motorstellmomentes mit einer Begrenzung auf ein maximales Motorsollmoment,

Fig. 6     ein weiteres Blockschaltbild zur Ermittlung des Motorstellmomentes mit einer Begrenzung des Motorsollmomentes durch fortlaufende Beaufschlagung mit einem Begrenzungsfaktor.

In den Figuren sind gleiche Bauteile mit gleichen Bezugszeichen versehen.

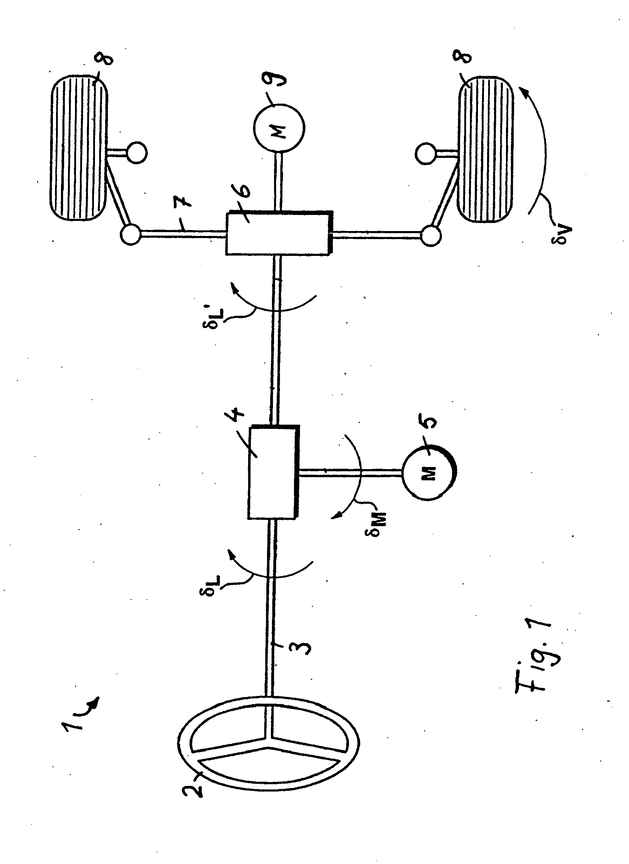

Fig. 1 stellt ein Lenksystem 1 in einem Kraftfahrzeug dar mit einem Lenkrad 2, einer mit dem Lenkrad 2 verbundenen Lenkwelle 3, einem Lenkgetriebe 6 und einem Lenkgestänge 7, welches mit den lenkbaren Vorderrädern 8 gekoppelt ist. Über das Lenkrad 2 gibt der Fahrer einen Lenkwinkel $\delta_L$ vor, der über die Lenkwelle 3 und das Lenkgetriebe 6 in einen Zahnstangenhub im Lenkgestänge 7 übertragen wird, woraufhin sich in den lenkbaren Vorderrädern 8 ein Radlenkwinkel $\delta_V$ einstellt.

Dem Lenkgetriebe 6 ist ein Servo- bzw. Stellmotor 9 zugeordnet, der zur Unterstützung und Reduzierung des vom Fahrer aufzubringenden Handlenkmomentes $M_{Hand}$ dient. Der Stellmotor 9 ist zweckmäßig als elektrischer Stellmotor ausgebildet, wobei gegebenenfalls auch ein hydraulischer Aktuator in Betracht kommt.

Die Lenkwelle 3 ist zweigeteilt und weist ein zwischengelagertes Überlagerungsgetriebe 4 auf, dem ein weiterer Stellmotor 5 zugeordnet ist. Bei Betätigung des Stellmotors 5 wird in dem Überlagerungsgetriebe 4 ein Zusatzdrehwinkel $\delta_M$ erzeugt, der dem Lenkwinkel $\delta_L$, welcher vom Fahrer vorgegeben wird, zum resultierenden Lenkwinkel $\delta_L'$ überlagert wird. Dieser resultierende Lenkwinkel $\delta_L'$ wird dem Lenkgetriebe 6 als Eingangswinkel zugeführt. Ohne Betätigung des Stellmotors 5 wird auch kein Zusatzdrehwinkel $\delta_M$ generiert, so dass bei nicht betätigtem Stellmotor 5 der resultierende Lenkwinkel $\delta_L'$ mit dem vom Fahrer vorgegebenen Lenkwinkel $\delta_L$ identisch ist. Auf das Überlagerungsgetriebe 4 einschließlich Stellmotor 5 kann gegebenenfalls auch verzichtet werden.

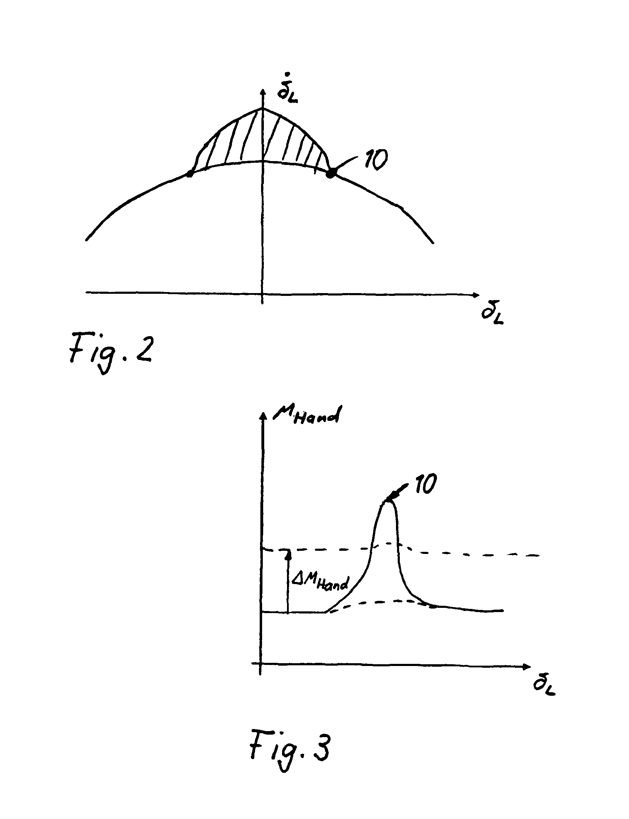

In Fig. 2 ist der Verlauf der Lenkwinkelgeschwindigkeit $\dot\delta_L$ als Funktion des Lenkwinkels $\delta_L$ oder äquivalent hierzu als Funktion des Zahnstangenhubs dargestellt. Der eingezeichnete Lenkwinkelgeschwindigkeitsverlauf ist lenksystemspezifisch und hängt von der Dimensionierung und Parametrierung der gewählten Aktuatorik ab. In dem Mittenbereich des Lenkwinkels $\delta_L$ weist der Lenkwinkelgeschwindigkeitsverlauf eine schraffiert gekennzeichnete Überhöhung auf, die die maximal erreichbare Lenkwinkelgeschwindigkeit um die Nulllage des Lenksystems darstellt, die von dem Servo- bzw. Stellmotor maximal unterstützt werden kann. Diese schraffierte Überhöhung stellt eine Reserve des Servo- bzw. Stellmotors dar, die jedoch in der Regel nicht benötigt wird; vielmehr wird ein Verlauf der Lenkwinkelgeschwindigkeit $\dot\delta_L$ gemäß dem teilkreisförmigen Verlauf unterhalb der schraffierten Fläche angestrebt bzw. realisiert. Die Überhöhung mündet im Punkt 10 in den teilkreisförmigen, gegenüber der Überhöhung abgeflachten Verlauf der Lenkwinkelgeschwindigkeit, wobei in dem Punkt 10 ein verhältnismäßig großer Gradient im Lenkwinkelgeschwindigkeitsverlauf vorliegt.

In Fig. 3 ist der Verlauf des vom Fahrer vorzugebenden Handmomentes $M_{Hand}$ als Funktion des Lenkwinkels $\delta_L$ dargestellt. Der Verlauf mit durchgezogenem Strich ist charakteristisch für Ausführungen aus dem Stand der Technik, der Verlauf mit strichlierter Linie ist dagegen kennzeichnend für die Erfindung. Gemäß dem Handmomentverlauf mit durchgezogenem Strich steigt das Handmoment $M_{Hand}$ in dem Punkt 10, der den Übergang mit hohem Gradienten im Lenkwinkelgeschwindigkeitsverlauf charakterisiert, stark an. Dieser starke Anstieg ist darauf zurückzuführen, dass die maximal erreichbare Lenkwinkelgeschwindigkeit $\dot\delta_L$ im Mittenbereich der Lenkung, wie in Fig. 2 dargestellt, überhöht ist und im Punkt 10 einem hohen Gradienten unterliegt. Lenkt der Fahrer mit hoher Lenkwinkelgeschwindigkeit im Mittenbereich und stößt mit zunehmender Lenkwinkelauslenkung an diesen Punkt 10, wird der Widerstand im Lenksystem schlagartig erhöht.

Um diesen plötzlichen Anstieg des Widerstandes im Lenksystem zu reduzieren, wird der mit strichlierter Linie dargestellte Verlauf des Handmomentes $M_{Hand}$ eingestellt, der sich in dem Abschnitt vor Erreichen des Punktes 10 durch einen höheren Verlauf auszeichnet, der gegenüber dem ursprünglichen Verlauf um den Betrag $\Delta M_{Hand}$ angehoben ist. $\Delta M_{Hand}$ wird so gewählt, dass im Punkt 10 keine oder nur eine geringfügige Überhöhung stattfindet, so dass der Fahrer zwar bis zum Erreichen des Punktes 10 ein verhältnismäßig hohes Handmoment $M_{Hand}$ aufbringen muss, jedoch während des Lenkvorganges keine schlagartige Erhöhung des Widerstandes spürt. Der um den Betrag $\Delta M_{Hand}$ angehobene, strichliert dargestellte Verlauf des Handmomentes $M_{Hand}$ entspricht einer Lenkwinkelgeschwindigkeit entlang der die schraffierte Fläche nach oben begrenzenden Linie in Fig. 2, also der vom Stell- bzw. Servomotor maximal zu unterstützenden Geschwindigkeit.

Eingetragen ist in Fig. 3 außerdem eine untere strichlierte Linie, die die starke Überhöhung im Handmoment gemäß Stand der Technik mit durchgezogenem Strich mit nur geringfügiger Überhöhung überbrückt und im Übrigen in den Bereichen vor und nach der Überhöhung mit dem durchgezogenem verlauf zusammenfällt. Dieser Verlauf des Handmomentes $M_{Hand}$ entspricht einer Lenkwinkelgeschwindigkeit entlang der teilkreisförmigen Linie in Fig. 2, also unterhalb der schraffierten Fläche.

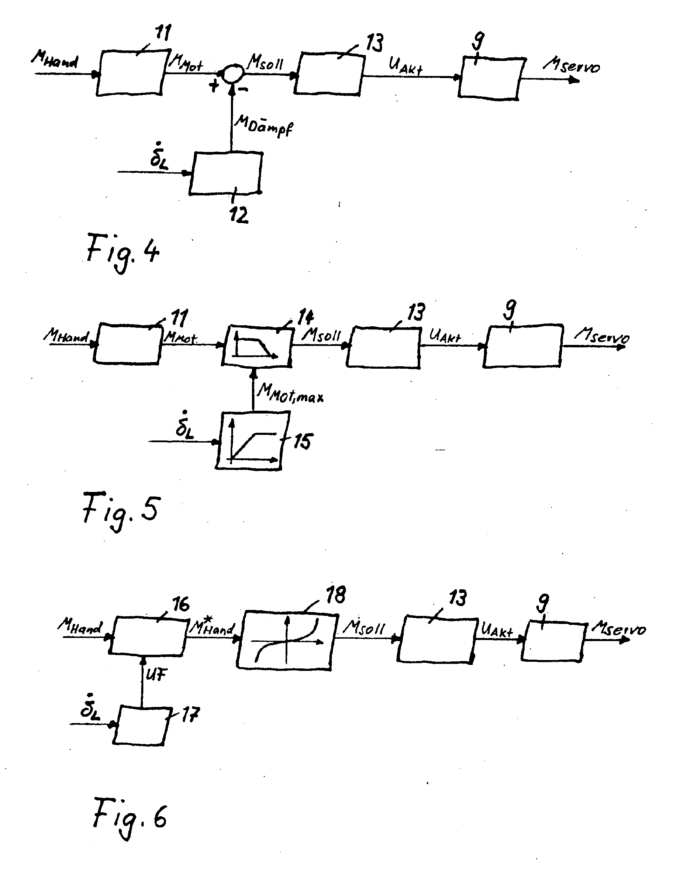

Im Blockschaltbild gemäß Fig. 4 ist das erfindungsgemäße Lenksystem in einer ersten Ausführung dargestellt. Das vom Fahrer aufzubringende Handmoment $M_{Hand}$ wird einem Lenkungsregler 11 zugeführt, in dem ein Motorsollmoment $M_{Mot}$ generiert wird. Von diesem Motorsollmoment $M_{Mot}$ wird ein berechnetes Dämpfungsmoment $M_{Dämpf}$ subtrahiert, das in einem Dämpfungsglied 12 als Funktion der Lenkwinkelgeschwindigkeit $\dot\delta_L$ ermittelt wird, die als Eingangsgröße in das Dämpfungsglied 12 eingeht. Die Differenz von Motorsollmoment $M_{Mot}$ und Dämpfungsmoment $M_{Dämpf}$ findet als Sollmomentvorgabe $M_{soll}$ Eingang in einen Motorregler 13, der als Ausgang eine Aktuatoreingangsgröße zur Verfügung stellt, insbesondere eine Aktuatorspannung $U_{Akt}$. Die Aktuatorspannung $U_{Akt}$ wird anschließend dem Stellmotor 9 zugeführt, in welchem ein Servo- bzw. Motorstellmoment $M_{Servo}$ erzeugt wird, welches in das Lenksystem eingespeist wird. Da es sich um einen geschlossenen Regelkreis handelt, bewirkt die Subtraktion des Dämpfungsmomentes $M_{Dämpf}$ von dem Motorsollmoment $M_{Mot}$ eine entsprechend reduzierte Sollmomentvorgabe $M_{soll}$, die durch ein erhöhtes Handmoment $M_{Hand}$ ausgeglichen werden muss.

Das gleiche Prinzip des Ausgleichs eines reduzierten Sollmomentes über eine Erhöhung des Handmomentes trifft auch auf die in den Fig. 5 und 6 dargestellten Blockschaltbilder zu, in denen Lenksysteme in weiteren Ausführungen dargestellt sind. Gemäß Fig. 5 wird in einer Funktion 15 ein Maximalwert $M_{Mot,max}$ des Motorsollmomentes in Abhängigkeit der Lenkwinkelgeschwindigkeit $\dot{\delta}_L$ bestimmt, wobei der Maximalwert $M_{Mot,max}$ einem Begrenzer 14 zugeführt wird, dem als weitere Eingangsgröße das im Regler 11 aus dem Handmoment $M_{Hand}$ erzeugte Motorsollmoment $M_{Mot}$ geführt wird. Dieses Motorsollmoment $M_{Mot}$ wird im Begrenzer 14 auf den Maximalwert $M_{Mot,max}$ gedeckelt und als Sollmomentvorgabe $M_{soll}$ in den weiteren Ablaufschritten dem Motorregler 13 zugeführt, in dem die Aktuatorspannung $U_{Akt}$ erzeugt wird, die dem Stellmotor 9 als Eingangsgröße zur Erzeugung des Motorstellmomentes $M_{Servo}$ zugeführt wird.

Im Ausführungsbeispiel nach Fig. 6 wird bereits der rechnerische Wert des Handmomentes $M_{Hand}$ in einem Multiplizierer 16 mit einem Begrenzungsfaktor UF multipliziert, der regelmäßig kleiner als 1 ist. Dieser Begrenzungsfaktor UF wird in einer Funktion 17 in Abhängigkeit der Lenkwinkelgeschwindigkeit $\delta_L$ bestimmt. Diese rechnerische Begrenzung wird als bewertetes Handmomentes $M^*_{Hand}$ anschließend einem Block 18 zugeführt, in dem eine Kennlinie der Sollmomentvorgabe $M_{soll}$ in Abhängigkeit des Handmomentes $M_{Hand}$ abgelegt ist. Da der Arbeitspunkt auch trotz der künstlich vorgenommenen Reduzierung des Handmomentes $M_{Hand}$ gleich bleibt, muss für die Beibehaltung des Arbeitspunktes das tatsächliche Handlenkmoment $M_{Hand}$ erhöht werden, um die gleiche Sollmomentvorgabe $M_{soll}$ zu erreichen. Im weiteren Verlauf wird die Sollmomentvorgabe $M_{soll}$ dem Motorregler 13 zur Erzeugung der Aktuatorspannung $U_{Akt}$ zugeführt, die als Eingangsgröße für den Stellmotor 9 zur Generierung des Motorstellmomentes $M_{Servo}$ dient.

**Patentansprüche**

1. Verfahren zum Betrieb eines Lenksystems in einem Kraftfahrzeug, wobei das Verfahren nachfolgende Verfahrensschritte aufweist:

   - ein Motorstellmoment ($M_{servo}$) wird zur Lenkunterstützung im Lenksystem erzeugt, wobei einem Stellmotor (9) eine Sollmomentvorgabe ($M_{soll}$) zugeführt wird,
   - der Fahrer gibt über das Lenkrad ein Handlenkmoment ($M_{Hand}$) im Lenksystem vor und in Abhängigkeit einer Fahrzeugzustands-oder Fahrzeugbetriebsgröße ($\dot{\delta}_{L,Grenz}$) wird der Widerstand gegen Lenkwinkeländerungen ($\Delta\delta_L$) zur Steigerung des vom Fahrer aufzubringenden Handlenkmoments ($M_{Hand}$) erhöht,
   - als Fahrzeugzustands- bzw. Betriebsgröße wird eine Lenkwinkelgrenzgeschwindigkeit ($\delta_{L,Grenz}$) berücksichtigt, wobei der Widerstand gegen Lenkwinkeländerungen ($\Delta\delta_L$) erhöht wird, wenn die Lenkwinkelgrenzgeschwindigkeit ($\delta_{L,Grenz}$) überschritten wird, und wobei die Lenkwinkelgrenzgeschwindigkeit ($\delta_{L,Grenz}$)

als Funktion des Lenkwinkels ($\delta_L$) darstellbar ist; und

der Widerstand gegen Lenkwinkeländerungen ($\Delta\delta_L$) nur bis zur einer beim Parkieren auftretenden Fahrzeuggrenzgeschwindigkeit ($V_{Grenz}$) und in einem Mittenbereich des Lenkwinkels $\delta_L$ erhöht wird.

2. Verfahren nach Anspruch 1,
   **dadurch gekennzeichnet, dass** der Widerstand gegen Lenkwinkeländerungen ($\Delta\delta_L$) erhöht wird, indem die dem Stellmotor (9) zuzuführende Sollmomentvorgabe ($M_{soll}$) begrenzt bzw. reduziert wird oder dass das Motorstellmoment ($M_{Servo}$) zur Lenkunterstützung im Lenksystem reduziert wird, indem das Motorsollmoment ($M_{Mot,soll}$) auf einen Maximalwert ($M_{Mot,max}$) begrenzt wird

3. Verfahren nach Anspruch 1 oder 2,
   **dadurch gekennzeichnet,**
   **dass** die Begrenzung des Motorsollmoment ($M_{Mot,soll}$) auf einen Maximalwert ($M_{Mot,max}$) in Abhängigkeit der Lenkwinkelgeschwindigkeit ($\delta_L$) erfolgt.

4. Verfahren nach Anspruch nach einem der Ansprüche 1 bis 3,
   **dadurch gekennzeichnet,**
   **dass** der Widerstand gegen Lenkwinkeländerungen ($\Delta\delta_L$) nur unterhalb einer Fahrzeuggrenzgeschwindigkeit ($v_{Grenz}$) von 20 km/h erhöht wird.

5. Verfahren nach einem der Ansprüche 1 bis 4,
   **dadurch gekennzeichnet,**
   **dass** der Widerstand gegen Lenkwinkeländerungen ($\Delta\delta_L$) als von der Lenkwinkel-geschwindigkeit ($\delta_L$) abhängige Dämpfungsfunktion ausgeführt ist, derart, dass der Lenkwinkeländerung ($\Delta\delta_L$) ein lenkwinkelgeschwindigkeitsabhängiges Dämpfungsmoment ($M_{Dämpf}$) entgegensteht.

6. Verfahren nach Anspruch 7,
   **dadurch gekennzeichnet,**
   **dass** die dem Stellmotor (9) zuzuführende Sollmomentvorgabe ($M_{soll}$) aus der Differenz von einem in einem Regler berechneten Motorsollmoment ($M_{Mot,soll}$) und dem lenkwinkelgeschwindigkeitsabhängigen Dämpfungsmoment ($M_{Dämpf}$) berechnet wird:

$$M_{soll} = M_{Mot,soll} - M_{Dämpf} .$$

7. Verfahren nach einem der Ansprüche 1 bis 6,
   **dadurch gekennzeichnet,**
   **dass** der Widerstand gegen Lenkwinkeländerungen ($\Delta\delta_L$) **dadurch** erhöht wird, dass das Motorstellmoment ($M_{Servo}$) zur Lenkunterstützung im Lenksystem reduziert wird, indem der Wert des Handmomentes ($M_{Hand}$) durch Beaufschlagung mit einem Begrenzungsfaktor (UF) begrenzt wird.

8. Lenksystem mit mitteln zur Durchführung des Verfahrens nach einem der Ansprüche 1 bis 7, mit wenigstens einem lenkbaren Fahrzeugrad (8), einem Lenkgestänge (7), einem Stellmotor (9) und einer Regel- bzw. Steuereinheit.

**Claims**

1. Method for operating a steering system in a motor vehicle, the method having the following method steps:

   - a motor actuating moment ($M_{Servo}$) is generated for steering assistance in the steering system, a setpoint moment parameter ($M_{soll}$) being fed to an actuating motor (9),
   - via the steering wheel, the driver stipulates a manual steering moment ($M_{Hand}$) in the steering system and, as a function of a vehicle state variable or vehicle operation variable ($\delta_{L,Grenz}$), the resistance to steering-angle changes ($\Delta\delta_L$) is increased in order to increase the manual steering moment ($M_{Hand}$) which is to be applied by the driver,
   - a steering-angle limit speed ($\delta_{L,Grenz}$) is taken into consideration as vehicle state or operation variable, the resistance to steering-angle changes ($\Delta\delta_L$) being increased if the steering-angle limit speed ($\delta_{L,Grenz}$) is exceeded, and it being possible to represent the steering-angle limit speed ($\delta_{L,Grenz}$) as a function of the steering angle ($\delta_L$), and the resistance to steering-angle changes ($\Delta\delta_L$) being increased only as far as a vehicle limit speed ($v_{Grenz}$) which occurs during parking, and in a centre range of the steering angle $\delta_L$.

2. Method according to Claim 1, **characterized in that** the resistance to steering-angle changes ($\Delta\delta_L$) is increased by the setpoint moment parameter ($M_{soll}$) which is to be fed to the actuating motor (9) being restricted or reduced, or by the motor actuating moment ($M_{Servo}$) for steering assistance in the steering system being reduced by the motor setpoint moment ($M_{Mot,soll}$) being restricted to a maximum value ($M_{Mot,max}$).

3. Method according to Claim 1 or 2, **characterized in that** the motor setpoint moment ($M_{Mot,soll}$) is restricted to a maximum value ($M_{Mot,max}$) as a function of the steering-angle speed ($\delta_L$).

4. Method according to one of Claims 1 to 3, **characterized in that** the resistance to steering-angle changes ($\Delta\delta_L$) is increased only below a vehicle limit speed ($v_{Grenz}$) of 20 km/h.

5. Method according to one of Claims 1 to 4, **characterized in that** the resistance to steering-angle changes ($\Delta\delta_L$) is formed as a damping function which is dependent on the steering-angle speed ($\delta_L$), in such a way that a damping moment ($M_{Dampf}$) which is a function of the steering-angle speed counteracts the steering-angle change ($\Delta\delta_L$).

6. Method according to Claim 7, **characterized in that** the setpoint moment parameter ($M_{soll}$) which is to be fed to the actuating motor (9) is calculated from the difference of a motor setpoint moment ($M_{Mot,soll}$) which is calculated in a regulator and the damping moment ($M_{Dämpf}$) which is a function of the steering-angle speed:

$$M_{soll} = M_{Mot,soll} - M_{Dämpf}.$$

7. Method according to one of Claims 1 to 6, **characterized in that** the resistance to steering-angle changes ($\Delta\delta_L$) is increased by virtue of the fact that the motor actuating moment ($M_{Servo}$) for steering assistance in the steering system is reduced by the value of the manual moment ($M_{Hand}$) being restricted by loading with a limiting factor (UF).

8. Steering system having means for carrying out the method according to one of Claims 1 to 7, having at least one steerable vehicle wheel (8), a steering linkage (7), an actuating motor (9) and a regulating or control unit.

**Revendications**

1. Procédé pour faire fonctionner un système de direction dans un véhicule automobile, dans lequel le procédé présente les étapes de procédé suivantes :

   - un couple de commande du moteur ($M_{Servo}$) est produit pour assister la direction dans le système de direction, une valeur initiale de couple de consigne ($M_{soll}$) étant fournie au moteur de commande (9),
   - le conducteur prédéfinit par le biais du volant de direction un couple de manipulation ($M_{Hand}$) dans le système de direction et en fonction d'une valeur d'état du véhicule ou d'une valeur de fonctionnement du véhicule ($\delta_{L,Grenz}$) la résistance aux variations d'angle de direction ($\Delta\delta_L$)

est augmentée afin d'augmenter le couple de manipulation ($M_{Hand}$) que le conducteur doit appliquer,

- on considère comme valeur d'état ou de fonctionnement du véhicule une vitesse limite d'angle de direction ($\delta_{L,Grenz}$), la résistance aux variations d'angle de direction ($\Delta\delta_L$) étant augmentée lorsque la vitesse limite d'angle de direction ($\delta_{L,Grenz}$) est dépassée, et

la vitesse limite d'angle de direction ($\delta_{L,Grenz}$) pouvant être représentée comme une fonction de l'angle de direction ($\delta_L$), et

la résistance aux variations d'angle de direction ($\Delta\delta_L$) n'étant augmentée que jusqu'à une vitesse limite du véhicule ($V_{Grenz}$) se produisant lors du stationnement et dans une plage moyenne d'angle de direction $\delta_L$.

2. Procédé selon la revendication 1,
**caractérisé en ce que** la résistance aux variations d'angle de direction ($\Delta\delta_L$) est augmentée en limitant ou en réduisant la valeur initiale de couple de consigne ($M_{soll}$) à fournir au moteur de commande (9), ou **en ce que** le couple de commande du moteur ($M_{Servo}$) est réduit pour l'assistance à la direction dans le système de direction, en limitant le couple de consigne du moteur ($M_{Mot,soll}$) à une valeur maximale ($M_{Mot,max}$).

3. Procédé selon la revendication 1 ou 2,
**caractérisé en ce que**
la limitation du couple de consigne du moteur ($M_{Mot,soll}$) à une valeur maximale ($M_{Mot,max}$) s'effectue en fonction de la vitesse de l'angle de direction ($\delta_L$) .

4. Procédé selon l'une quelconque des revendications 1 à 3,
**caractérisé en ce que**
la résistance aux variations d'angle de direction ($\Delta\delta_L$) est augmentée seulement en dessous d'une vitesse limite du véhicule ($V_{Grenz}$) de 20 km/h.

5. Procédé selon l'une quelconque des revendications 1 à 4,
**caractérisé en ce que**
la résistance aux variations d'angle de direction ($\Delta\delta_L$) est réalisée sous forme de fonction d'amortissement dépendant de la vitesse de l'angle de direction ($\delta_L$), de telle sorte qu'un couple d'amortissement ($M_{Dämpf}$) dépendant de la vitesse d'angle de direction s'oppose à la variation d'angle de direction ($\Delta\delta_L$) .

6. Procédé selon la revendication 7,
**caractérisé en ce que**
la valeur initiale de couple de consigne ($M_{soll}$) à fournir au moteur de commande (9) est calculée à partir de la différence d'un couple de consigne du moteur ($M_{Mot,soll}$) calculé dans un ordinateur et du couple d'amortissement ($M_{Dämpf}$) dépendant de la vitesse de l'angle de direction :

$$M_{soll} = M_{Mot,soll} - M_{Dämpf}.$$

7. Procédé selon l'une quelconque des revendications 1 à 6,
**caractérisé en ce que**
la résistance aux variations d'angle de direction ($\Delta\delta_L$) est augmentée par le fait que le couple de commande du moteur ($M_{Servo}$) pour l'assistance à la direction dans le système de direction est réduit en limitant la valeur du couple manuel ($M_{Hand}$) par sollicitation avec un facteur de limitation (UF).

8. Système de direction comprenant des moyens pour mettre en oeuvre un procédé selon l'une quelconque des revendications 1 à 7, comprenant au moins une roue de véhicule dirigeable (8), une tringlerie de direction (7), un moteur de commande (9) et une unité de régulation ou de commande.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10221678 A1

- JP 6340270 A